# FASCICULE DE BREVET EUROPEEN

(11) **EP 2 915 104 B1**
(45) Date de publication et mention de la délivrance du brevet: **26.05.2021**
(21) Numéro de dépôt: 13799221.0
(22) Date de dépôt: 05.11.2013
(51) Int. Cl.: G06K 19/077, G06K 19/02

(54) **PROCÉDÉ DE FABRICATION D'UN CONNECTEUR POUR MODULE DE CARTE À PUCE, CONNECTEUR DE CARTE À PUCE OBTENU PAR CE PROCÉDÉ ET MODULE DE CARTE À PUCE COMPORTANT UN TEL CONNECTEUR**
VERFAHREN ZUR HERSTELLUNG EINER ANSCHLUSSVORRICHTUNG FÜR DAS MODUL EINER SMART CARD, DURCH DAS VERFAHREN ERHALTENE ANSCHLUSSVORRICHTUNG UND MODUL MIT SMART CARD ANSCHLUSSVORRICHTUNG
METHOD OF MANUFACTURING A CONNECTOR FOR MODULE OF A SMART CARD, SMART CARD CONNECTOR OBTAINED BY THE METHOD AND MODULE WITH SMART CARD CONNECTOR

(30) Priorité: 05.11.2012 FR 1260498
(43) Date de publication de la demande: 09.09.2015
(73) Titulaire: Linxens Holding, 78280 Guyancourt (FR)
(72) Inventeur: MATHIEU, Christophe, F-78200 Mantes La Jolie (FR)
(74) Mandataire: Regi, François-Xavier
(86) Numéro de dépôt international: PCT/EP2013/073070
(87) Numéro de publication internationale: WO 2014/068145

(56) Documents cités:
- WO-A1-2009/030986
- FR-A1- 2 890 212
- US-A1- 2012 074 233

## Description

L'invention concerne le domaine des connecteurs pour carte à puce.

Les cartes à puce sont bien connues du public, qui en a de multiples usages : cartes de crédit, carte SIM pour téléphones portable, cartes de transport, cartes d'identité, etc.

Les cartes à puce sont généralement constituées d'un support rigide, par exemple en matière plastique, constituant l'essentiel de la carte, dans lequel est incorporé un module électronique fabriqué séparément. Ce module électronique comporte un circuit imprimé généralement flexible muni d'une puce (circuit intégré) et de moyens de transmission pour transmettre des données de la puce à un dispositif lecteur de carte ou de ce dispositif à la carte. Ces moyens de transmission des données peuvent être constitués d'une antenne et/ou d'un connecteur. Lorsque les moyens de transmission comprennent uniquement un connecteur, la carte à puce est dite « à contact ». Le connecteur comporte alors des contacts électriquement connectés à la puce et constitués de pistes métalliques conductrices affleurant sur le module électronique, en surface du support, pour une connexion par contact électrique avec un dispositif lecteur de carte. Il existe aussi des moyens de transmission comprenant uniquement une antenne, la carte à puce est alors dite « sans contact ». Dans ce cas, l'antenne est électriquement connectée à la puce et communique directement, ou par l'intermédiaire d'une autre antenne, dite antenne « booster », avec un dispositif lecteur de carte. Il existe enfin des cartes à puce dites « dual », dont les moyens de transmission comprennent à la fois un connecteur et une antenne. Dans la suite de ce document, nous nous intéressons plus particulièrement aux moyens de transmission des cartes « dual », mais également aux moyens de transmission des cartes « à contact ».

Dans l'art antérieur, les modules sont généralement formés à partir d'un substrat diélectrique recouvert sur au moins l'une de ses faces d'une couche métallique conductrice. Dans cette couche conductrice sont formés des moyens de transmission que ce soient des contacts et/ou une antenne. Lorsque les moyens de transmission correspondent à une antenne, les spires de l'antenne sont isolées électriquement et légèrement espacées les unes des autres, avec un pas constant pour créer une inductance permettant d'accorder la transmission sans contact. Le substrat diélectrique peut être du verre-epoxy FR4 ou G10, ou du PET (Polyethylene Terephthalate), du PEN (Polyethylene Naphthalate), un polyimide, etc. Ce substrat est généralement mince et flexible.

D'une part, lorsque les moyens de transmission comportent une antenne il est souhaitable que celle-ci ne soit pas perturbée par un environnement métallique situé dans son voisinage. Par exemple, dans un téléphone portable avec une fonction de communication en champ proche (« Near Field Communication » ou NFC selon la terminologie anglo-saxonne), un tel environnement perturbant peut provenir de la batterie ou d'un élément métallique du boîtier. Pour éviter ou limiter les perturbations électromagnétiques à proximité de l'antenne, il a déjà été proposé d'intercaler une feuille de ferrite, par exemple, entre l'antenne et l'élément potentiellement perturbateur (voir par exemple le document WO2009030986A1).

D'autre part, lorsque les moyens de transmission comportent des contacts qui sont par définition aussi eux-mêmes électriquement conducteurs (et donc eux-aussi potentiellement perturbateurs), il a aussi été proposé d'interposer une ferrite entre l'antenne et les contacts (Voir par exemple US2012074233 incorporé par référence), afin de créer un blindage électromagnétique, d'améliorer l'interaction des ondes radiofréquences avec l'antenne et de pallier l'inconvénient des contacts ou de tout autre élément conducteur (une batterie par exemple) placé à proximité de l'antenne.

Un inconvénient des solutions apportées par l'art antérieur est que l'introduction d'un feuillet ou d'une couche de ferrite entre l'antenne et l'élément conducteur ajoute à l'ensemble de l'encombrement en épaisseur, ce qui limite les possibilités d'une intégration compacte dans des dispositifs de plus en plus miniaturisés. Un possible manque de cohésion de l'empilement des différentes couches, ainsi que la complexité et un coût plus élevé de fabrication de cet empilement peuvent constituer d'autres inconvénients.

Un but de l'invention est de pallier au moins l'un des inconvénients de l'art antérieur.

A cet effet, il est prévu selon l'invention, un procédé de fabrication d'un connecteur pour module de carte à puce selon la revendication . Ce connecteur comporte au moins un contact électriquement conducteur. Par exemple il en comporte huit disposés selon la norme ISO 7816-2 sur un substrat électriquement isolant.

Par convention, la face principale du substrat sur laquelle sont disposés les contacts est appelée face avant ou face contact. Le substrat a bien entendu une épaisseur délimitée par cette face avant et une autre face principale opposée à celle-ci et appelée face arrière ou face de la puce, par laquelle ou sur laquelle peut être montée une puce. Le connecteur ne comporte pas nécessairement une puce lors de sa première commercialisation, mais en vue d'une connexion électrique ultérieure de la puce aux contacts, il est prévu de réaliser, avec le procédé selon l'invention, au moins un puits de connexion au moins partiellement obturé par une zone arrière du contact. Selon la technologie de connexion par soudure de fils (« wire-bonding » selon la terminologie anglo-saxonne), la puce est montée dans l'épaisseur du substrat ou sur la face arrière du substrat. Elle est alors électriquement connectée aux contacts de la face avant par des fils conducteurs soudés sur ou dans ces puits. De manière alternative, la puce munie de protubérances adaptées (« bumps » selon la terminologie anglo-saxonne) peut-être connectée aux contacts selon la technologie dite flip-chip, c'est-à-dire sur des plages métalliques situées sur la face arrière et reliées aux contacts de la face avant par des puits dont la paroi est métallisée. Dans tous les cas, les puits sont au moins partiellement fermés (ou obturés) du côté de la face avant du substrat par une portion de contact.

Enfin, selon l'invention, les contacts sont directement réalisés sur un substrat comprenant un matériau électriquement isolant avec des propriétés magnétiques. On notera qu'il est important que le matériau magnétique du substrat soit suffisamment isolant pour isoler électriquement les contacts les uns des autres.

Le matériau magnétique peut-être un matériau fritté, une matrice polymère incorporant des particules magnétique, etc. Avantageusement, le substrat comprend ou est constitué d'un matériau ferromagnétique.

Grâce à l'invention, l'épaisseur de la structure comportant un substrat, un matériau magnétique et les contacts est minimisée puisque le substrat est remplacé au moins en partie par le matériau magnétique. En outre, en utilisant un substrat magnétique flexible disponible en rouleau et des contacts réalisés par gravure ou par une technologie de type « grille de connexion » (« lead-frame » selon la terminologie anglo-saxonne), le procédé est rendu compatible avec la technologie « bobine-bobine » (« reel-to-reel » selon la terminologie anglo-saxonne). Le procédé selon l'invention peut alors être utilisé en continu, pour des productions en masse. Le procédé selon l'invention est donc de ce fait économiquement très compétitif.

Dans ce texte, on considère que les contacts sont directement réalisés sur le substrat, si la couche conductrice dans laquelle sont formés les contacts est rendue solidaire du substrat par l'intermédiaire ou non d'une couche d'adhésif, mais avantageusement sans autre matériau que cet éventuel adhésif intercalé entre le substrat et la couche conductrice. Ainsi, les contacts peuvent être réalisés dans une feuille d'un matériau conducteur laminée directement sur le substrat de matériau magnétique, avec ou sans adhésif entre les deux. De la même manière, une feuille de matériau conducteur peut être laminée sur la face arrière du substrat, par exemple pour réaliser une antenne.

Il faut noter que dans le procédé selon l'invention les étapes postérieures à l'application de la couche conductrice sur le substrat magnétique sont donc réalisées directement sur l'ensemble constitué du substrat magnétique et de la couche conductrice. Le matériau magnétique constitue donc bien un substrat pour l'ensemble des étapes de fabrication du connecteur selon l'invention.

Avantageusement, le procédé selon l'invention comprend une étape de dépôt d'un métal par galvanochimie et l'utilisation d'un matériau magnétique tel qu'une ferrite reste compatible avec ce type de dépôt.

L'invention concerne également un connecteur de carte à puce selon la revendication 5, obtenu par ce procédé, voire un module de carte à puce comprenant un tel connecteur.

D'autres caractéristiques et avantages de l'invention apparaîtront à la lecture de la description détaillée et des dessins annexés sur lesquels :
- La figure 1 représente schématiquement en perspective une carte à puce destinée à recevoir un connecteur selon l'invention, trois exemples de modes de réalisation du connecteur étant illustrés;
- Les figures 2a à 2j représentent schématiquement les différentes étapes d'un exemple de procédé conforme à l'invention ;
- La figure 3 représente schématiquement en coupe un premier mode de réalisation d'un connecteur obtenu avec le procédé représenté sur le figures 2a à 2j;
- La figure 4 représente schématiquement en coupe un deuxième mode de réalisation d'un connecteur selon l'invention;
- La figure 5 représente schématiquement en coupe un troisième mode de réalisation d'un connecteur selon l'invention;
- La figure 6 représente schématiquement en coupe un quatrième mode de réalisation d'un connecteur selon l'invention;
- Les figures 7a à 7c illustrent schématiquement les effets respectifs d'un élément électriquement conducteur et d'une couche intercalaire d'adhésif sur le flux magnétique passant à travers la bobine d'une antenne ;
- Les figures 8a et 8b représentent schématiquement respectivement en face arrière et en face avant un connecteur pour une carte SIM « dual »; et
- Les figures 9a et 9b représentent schématiquement respectivement en face avant et en face arrière un connecteur pour carte « dual » au format ID-1.

Plusieurs modes de réalisation de connecteurs selon l'invention sont décrits ci-dessous. Tous appartiennent au domaine de la carte à puce à contact.

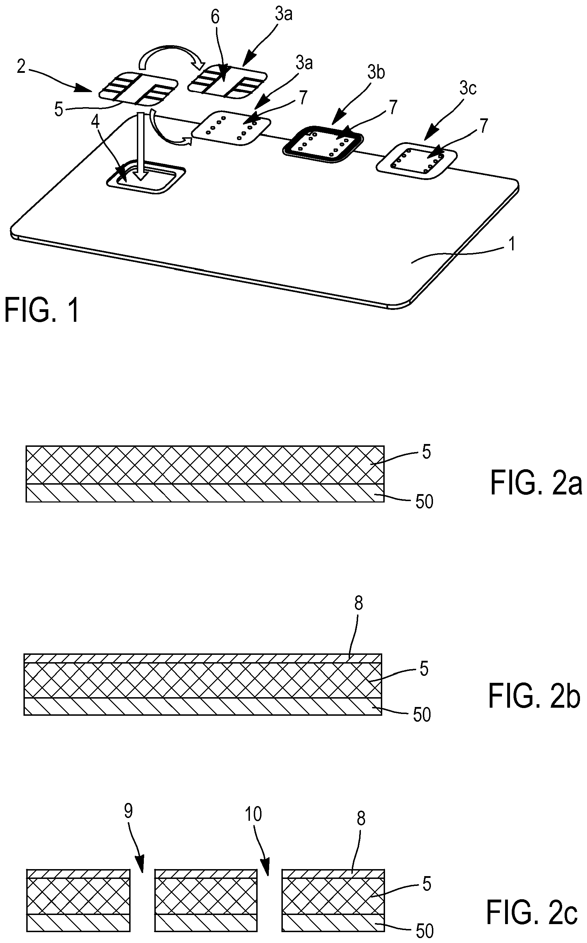

Comme représenté sur la figure 1, une carte à puce 1 comporte un module 2 avec un connecteur 3a, 3b ou 3c. Le module 2 est généralement réalisé sous forme d'un élément séparé qui est inséré dans une cavité 4 ménagée dans la carte 1. Cet élément comporte un substrat 5 flexible, constitué d'une ferrite par exemple, sur lequel est réalisé le connecteur 3a, 3b ou 3c. Le connecteur 3a, 3b ou 3c comporte plusieurs contacts 15 auxquels est ultérieurement connectée une puce (non-représentée sur cette figure).

Sur la figure 1, sont représentés trois exemples de connecteurs 3a, 3b, 3c. Ces connecteurs 3a, 3b ou 3c sont représentés une seule fois (en haut) vus par leur face avant 6 (face contact), puisque vus sur cette face ils sont identiques. Ces trois connecteurs 3a, 3b ou 3c sont représentés chacun individuellement (en bas) vu par leur face arrière 7. Le connecteur 3a correspond à un connecteur simple face. Le connecteur 3b correspond à un connecteur double face avec antenne (pour carte « dual »). Le connecteur 3c correspond à un connecteur double face sans antenne.

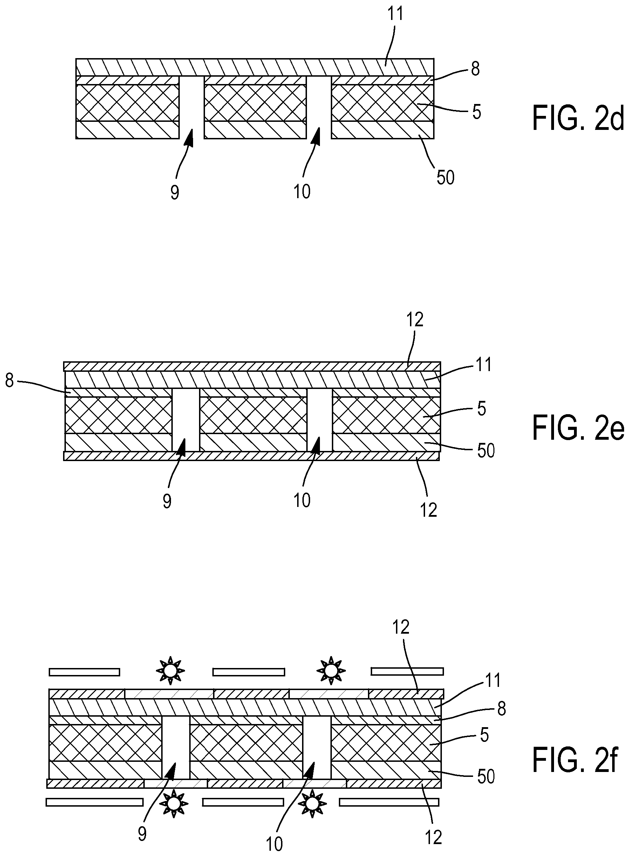

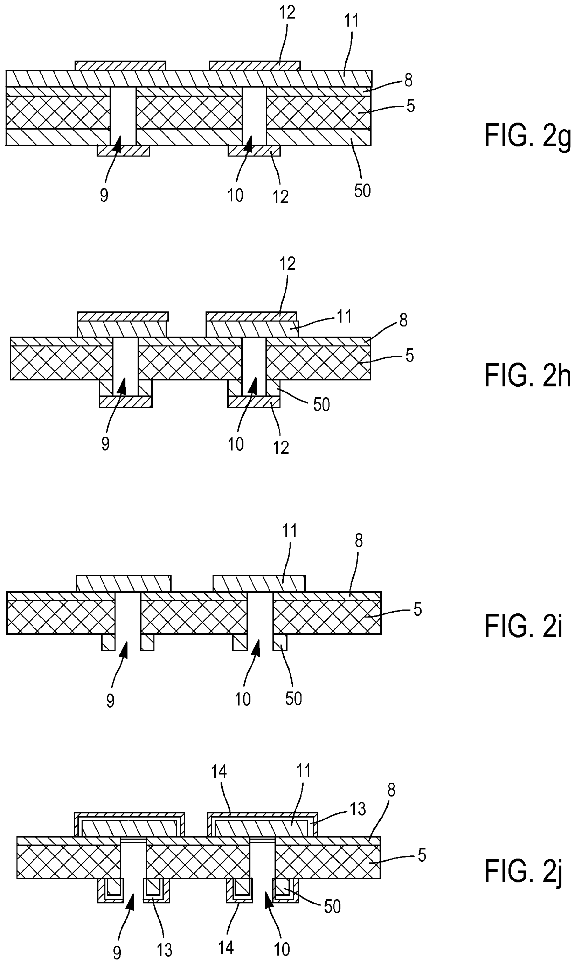

Les figures 2a à 2j illustrent schématiquement différentes étapes d'un exemple de procédé selon l'invention pour la fabrication du connecteur 3b par exemple. Ces étapes comprennent :
- la fourniture (Fig. 2a) d'un substrat 5 magnétique, par exemple de ferrite, stratifié avec une couche conductrice 50, par exemple de cuivre, formant donc ainsi par exemple un complexe ferrite/cuivre sans adhésif entre la ferrite et le cuivre (dans ce cas, on parle de « ferrite copper clad » selon la terminologie anglo-saxonne),
- l'enduction d'une face du substrat 5 avec une couche d'adhésif 8 (Fig. 2b),
- la perforation du substrat 5 muni de la couche d'adhésif 8 et du feuillet de cuivre 50 afin de réaliser des puits de connexion 9 et éventuellement une cavité 10 dans laquelle sera logée ultérieurement une puce (Fig. 2c),
- le complexage du substrat 5 muni de la couche d'adhésif 8 avec une autre couche conductrice 11 telle qu'une feuille de cuivre, la réticulation à chaud de la couche d'adhésif 8 (Fig. 2d),
- la lamination sur chaque face du substrat 5 d'un film sec photosensible 12 (Fig. 2e),
- l'insolation du film photosensible 12 (Fig. 2f),
- le développement du film photosensible 12 (Fig. 2g),
- la gravure chimique des couches de cuivre 11, 50 dans les zones non protégées par le film photosensible 12 (Fig. 2h),
- la dissolution (« strippage » selon la terminologie anglo-saxonne) du film photosensible 12 (Fig. 2i), et
- la métallisation des pistes obtenues après gravure des couches de cuivre 11, 50 en une ou plusieurs étapes pour former une couche de nickel 13 et une couche d'or ou de palladium 14 (Fig. 2j).

L'utilisation d'un substrat de ferrite 5 est tout à fait compatible avec des étapes de dépôts galvano-chimiques de nickel, d'or, d'argent, de palladium ou d'alliages de ces derniers, et ceci quel que soit l'ordre de ces dépôts. En particulier, celle-ci ne perd pas ses propriétés magnétiques au cours des différentes étapes du procédé selon l'invention.

A titre d'exemple, le substrat magnétique 5 peut être réalisé avec de la ferrite ayant la référence IFL04 chez TDK®. Ce matériau conserve ses propriétés magnétiques s'il est utilisé dans une gamme de température allant de -40°C à +85°C. Ses perméabilités magnétiques initiales sont µ' = 45 (perméabilité réelle) et µ" = 1,3 (pertes magnétiques) à la fréquence de 13.56 MHz

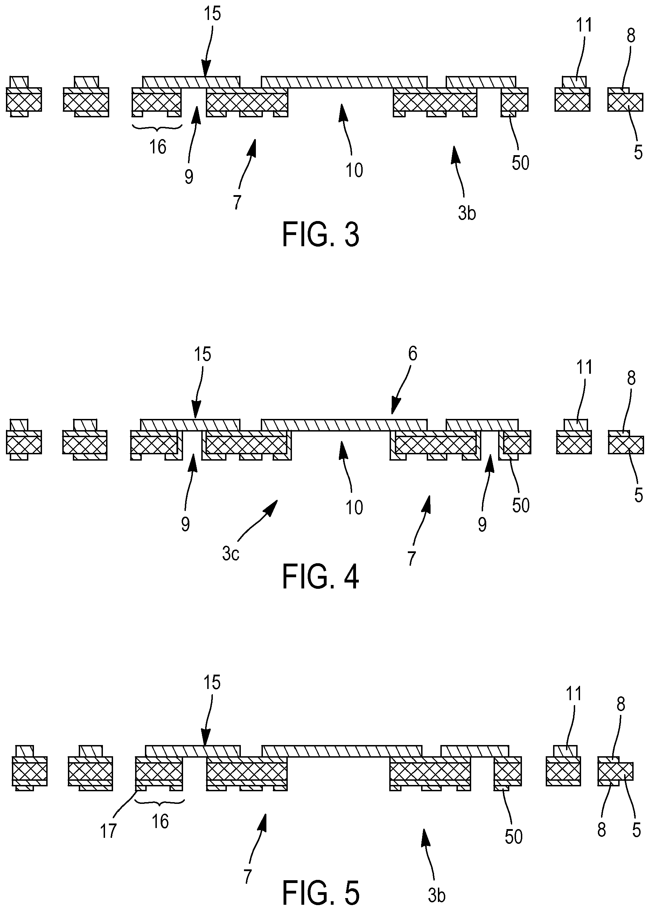

Le connecteur 3b obtenu par ce procédé est également représenté sur la figure 3 (pour simplifier la représentation, les couches de nickel, d'or et/ou de palladium sont représentées en tant que couches conductrices confondues avec celles de cuivre). Il comporte donc un substrat de ferrite 5, une couche d'adhésif 8 et des couches conductrices 11 et 50. L'étape de perforation mentionnée ci-dessus a permis de réaliser dans l'épaisseur du substrat des puits de connexion 9 et une cavité pour la puce 10, obturés par une zone arrière des contacts 15.

La face arrière 7 du substrat 5 est utilisée pour réaliser une antenne 16.

Selon un autre mode de réalisation du connecteur selon l'invention, représenté sur la figure 4, les puits de connexion 9 sont métallisés, selon une technologie connue de l'homme de l'art, pour connecter électriquement la face avant 6 et la face arrière 7. Un connecteur du type du connecteur 3c de la figure 1 est alors obtenu.

Encore un autre mode de réalisation du connecteur selon l'invention, obtenu avec une variante du procédé précédemment décrit, est représenté sur la figure 5. En effet, les étapes correspondant aux figures 2a et 2b du procédé décrit ci-dessus sont remplacées par des étapes d'enduction de chacune des faces du substrat 5 avec une couche d'adhésif 8, de complexage du substrat 5 muni de ces couches d'adhésif 8 avec des couches conductrices 11, 50 telles que feuilles de cuivre, et la réticulation à chaud des couches d'adhésif 8.

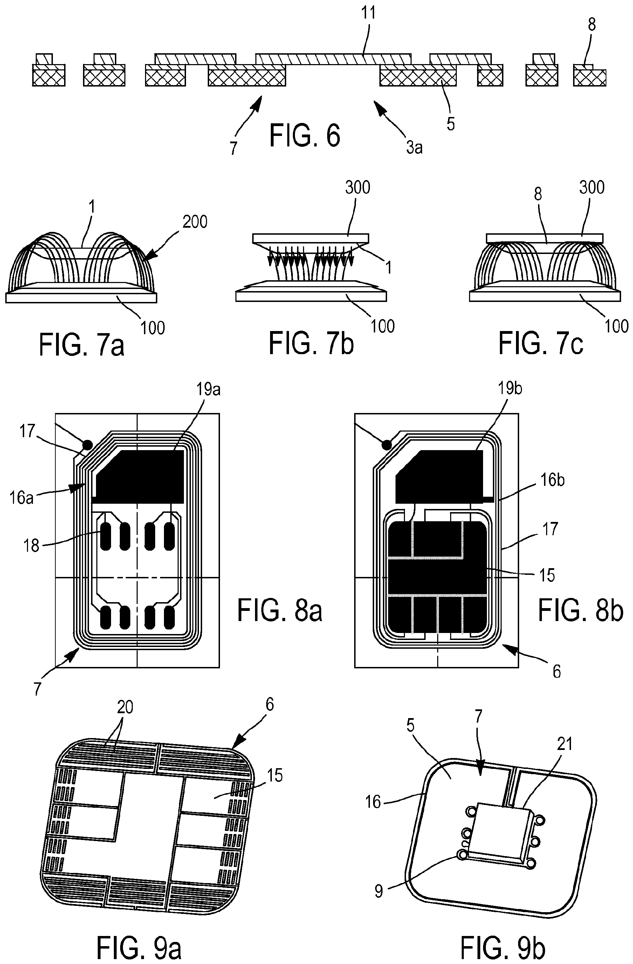

Un connecteur du type du connecteur 3b de la figure 1 est ainsi obtenu. Mais on note qu'avec ce type de configuration, les spires 17 de l'antenne 16 sont en contact proche mais pas direct avec le substrat 5 de ferrite. Entre les spires 17 et le substrat 8, une couche d'adhésif 8 ayant une épaisseur sensiblement égale à 20 µm (préférentiellement entre 1 et 100µm, plus préférentiellement entre 10 et 50µm et encore plus préférentiellement entre 15 et 25µm) est utilisée pour permettre aux flux électromagnétique de passer à travers les spires de l'antenne (voir figures 7a-7c). En effet, comme schématiquement représenté sur la figure 7a, lorsqu'une carte 1 munie d'une antenne est placée dans une champ magnétique 200 généré par un lecteur 100, le flux magnétique 200 passe au travers de la bobine formée des spires de l'antenne et génère un courant permettant de lire ou d'écrire des données dans la puce. En présence d'un élément électriquement conducteur 300, par exemple métallique, des courants de Foucault sont générés dans l'élément conducteur 300 qui écrantent le champ magnétique et l'empêche de reboucler à travers les spires de l'antenne de la carte 1. Le processus de lecture/écriture des données dans la puce est alors moins performant, voire inopérant. Grâce à un substrat magnétique 5, on pallie au moins partiellement cet effet d'écrantage, mais en outre, en intercalant une couche d'adhésif 8 (figure 7c), on favorise encore davantage le passage du flux magnétique 200. Avantageusement, la couche d'adhésif 8 possède des propriétés de perméabilités magnétiques proches de celles de l'air. On cherche en effet à maximiser la perméabilité magnétique réelle µ' et à minimiser les pertes de perméabilité µ" afin d'améliorer l'efficacité du blindage de la ferrite.

Selon encore un autre mode de réalisation, représenté sur la figure 6, une feuille de cuivre 11 est attachée seulement sur l'une des faces du substrat 5 par l'intermédiaire d'une couche d'adhésif 8 de la manière décrite en relation avec les figures 2a à 2c par exemple. La face arrière 7 ne comporte pas d'antenne. Un connecteur du type du connecteur 3a de la figure 1 est alors obtenu.

Les figures 8a et 8b illustrent une application du connecteur 3b dans une carte SIM. La face arrière 7 comporte des plots de connexion 18 eux-mêmes connectés électriquement au dos de contacts 15, ainsi qu'à une antenne RFID 16a constituée de quatre ou cinq spires 17 (voir figure 8a). Une partie du reste de la surface est utilisée pour réaliser une surface métallique formant une partie 19a d'un condensateur plan. La face avant 6 présente des contacts 15 entourés par une antenne RFID 16b avec un facteur de forme 2FF selon les normes ISO/IEC 7810 :2003 et 7816-2 pour carte SIM standard de 15x25 mm (voir figure 8b). L'antenne RFID 16b est constituée de 3 ou 4 spires 17. Une partie du reste de la surface est utilisée pour réaliser une surface métallique formant une autre partie 19b du condensateur plan.

Les figures 9a et 9b illustrent une application du connecteur du type 3b pour un module pour « booster ». Sur la face avant 6 sont réalisés des contacts 15 (voir figure 9a). Ces contacts 15 comportent des ouvertures 20 pour améliorer l'efficacité du matériau magnétique. Malgré ces ouvertures, la couche conductrice située sur la face avant 6 conserve une bonne tenue mécanique, utile pendant les phases ultérieures de fabrication du module et de mise en place de ce module dans une carte.

Sur la face arrière 7, une antenne 16 est connectée à la puce 21 (dans ce cas il s'agit d'un module complet) et, grâce à des puits de connexion 9 métallisés, aux contacts 15 situés sur la face avant 6. L'antenne 16 peut éventuellement être couplée électromagnétiquement, sans connexion électrique, à une autre antenne (non représentée) jouant un rôle de « booster » bien connu de l'homme du métier. Grâce à l'invention, il est possible d'obtenir un meilleur couplage de l'antenne 16 avec une antenne «booster», permettant ainsi de réduire les dimensions de cette dernière, voire de supprimer complètement la nécessité d'avoir une antenne « booster » (il devient alors possible de fabriquer un produit moins cher) et/ou d'augmenter la distance de lecture des données de la carte.

## Revendications

1. Procédé de fabrication d'un connecteur (3b) pour module de carte à puce, comprenant :
- d'une part la réalisation d'au moins un contact (15) électriquement conducteur sur une face avant (6) d'un substrat (5), constitué d'un matériau magnétique électriquement isolant, ce substrat (5) comportant aussi une face arrière (7) et une épaisseur entre la face avant (6) et la face arrière (7), ainsi que la réalisation sur la face arrière (7) d'une antenne (16), et
- d'autre part la réalisation dans l'épaisseur du substrat (5) d'au moins un puits de connexion (9) au moins partiellement obturé par une zone arrière du contact (15), et
**caractérisé par le fait qu'**il comprend une étape d'enduction sur la face arrière du substrat avec une couche d'adhésif (8) avec une épaisseur de la couche d'adhésif (8) comprise entre 1 et 100 micromètres et une étape de complexage d'une couche de matériau conducteur (50) sur la couche d'adhésif (8), l'antenne (16) étant formée dans la couche de matériau conducteur (50).

2. Procédé de fabrication selon la revendication 1, dans lequel une couche d'adhésif est enduite sur la face avant du substrat (5).

3. Procédé selon l'une des revendications précédentes, dans lequel au moins la couche d'adhésif (8) enduite sur la face arrière à une épaisseur comprise entre 10 et 50 micromètres.

4. Procédé selon l'une des revendications précédentes, dans lequel la couche d'adhésif (8) en face arrière (7) a une épaisseur comprise entre 15 et 25 micromètres.

5. Connecteur pour module de carte à puce, comportant au moins un contact (15) électriquement conducteur sur une face avant (6) d'un substrat (5) constitué d'un matériau magnétique électriquement isolant, ce substrat (5) comportant aussi une face arrière (7) avec une antenne (16), une épaisseur entre la face avant (6) et la face arrière (7), et au moins un puits de connexion (9) réalisé dans l'épaisseur du substrat (5) au moins partiellement obturé par une zone arrière du contact (15),
**caractérisé par le fait qu'**il comporte une couche d'adhésif (8), entre le substrat (5) et une couche de matériau conducteur (50) dans laquelle est formée l'antenne (16), cette couche d'adhésif ayant une épaisseur comprise entre 1 et 100 micromètres.

6. Connecteur selon la revendication 5, dans lequel la couche d'adhésif (8) en face arrière (7) a une épaisseur comprise entre 10 et 50 micromètres.

7. Connecteur selon la revendication 5, dans lequel la couche d'adhésif (8) en face arrière (7) a une épaisseur comprise entre 15 et 25 micromètres.

8. Module de carte à puce, comportant un connecteur (3b) selon l'une des revendications 5 à 7.

## Patentansprüche

1. Verfahren zur Herstellung eines Verbinders (3b) für ein Chipkartenmodul, umfassend:
- einerseits das Ausbilden mindestens eines elektrisch leitenden Kontakts (15) auf einer Vorderseite (6) eines Substrats (5), das von einem elektrisch isolierenden magnetischen Material gebildet ist, wobei dieses Substrat (5) auch eine Rückseite (7) und eine Dicke zwischen der Vorderseite (6) und der Rückseite (7) aufweist, sowie das Ausbilden einer Antenne (16) auf der Rückseite (7), und
- andererseits das Ausbilden, in der Dicke des Substrats (5), mindestens eines Verbindungsschachts (9), der wenigstens teilweise von einem hinteren Bereich des Kontakts (15) verschlossen ist, und
**dadurch gekennzeichnet, dass** es einen Schritt des Beschichtens auf der Rückseite des Substrats mit einer Klebeschicht (8) umfasst, mit einer Dicke der Klebeschicht (8) zwischen 1 und 100 Mikrometern, und einen Schritt einer Komplexbildung einer Schicht aus leitendem Material (50) auf der Klebeschicht (8), wobei die Antenne (16) in der Schicht aus leitendem Material (50) ausgebildet ist.

2. Herstellungsverfahren nach Anspruch 1, wobei eine Klebeschicht auf die Vorderseite des Substrats (5) aufgetragen wird.

3. Verfahren nach einem der vorhergehenden Ansprüche, wobei wenigstens die Klebeschicht (8), die auf die Rückseite aufgetragen wird, eine Dicke zwischen 10 und 50 Mikrometern aufweist.

4. Verfahren nach einem der vorhergehenden Ansprüche, wobei wenigstens die Klebeschicht (8) auf der Rückseite (7) eine Dicke zwischen 15 und 25 Mikrometern aufweist.

5. Verbinder für ein Chipkartenmodul, aufweisend mindestens einen elektrisch leitenden Kontakt (15) auf einer Vorderseite (6) eines Substrats (5), das von einem elektrisch isolierenden magnetischen Material gebildet ist, wobei dieses Substrat (5) auch eine Rückseite (7) mit einer Antenne (16), eine Dicke zwischen der Vorderseite (6) und der Rückseite (7) und mindestens einen Verbindungsschacht (9), der in der Dicke des Substrats (5) ausgebildet ist, der wenigstens teilweise von einem hinteren Bereich des Kontakts (15) verschlossen ist, aufweist,
**dadurch gekennzeichnet, dass** er eine Klebeschicht (8) zwischen dem Substrat (5) und einer Schicht aus leitendem Material (50), in der die Antenne (16) ausgebildet ist, aufweist, wobei diese Klebeschicht eine Dicke zwischen 1 und 100 Mikrometern aufweist.

6. Verbinder nach Anspruch 5, wobei die Klebeschicht (8) auf der Rückseite (7) eine Dicke zwischen 10 und 50 Mikrometern aufweist.

7. Verbinder nach Anspruch 5, wobei die Klebeschicht (8) auf der Rückseite (7) eine Dicke zwischen 15 und 25 Mikrometern aufweist.

8. Chipkartenmodul, aufweisend einen Verbinder (3b) nach einem der Ansprüche 5 bis 7.

## Claims

1. Method of fabricating a connector (3b) for a chip card module, comprising:
- on the one hand production of at least one electrically conductive contact (15) on a front face (6) of a substrate (5), consisting of an electrically insulating magnetic material, this substrate (5) also comprising a rear face (7) and a thickness between the front face (6) and the rear face (7), and the production on the rear face (7) of an antenna (16), and
- on the other hand production in the thickness of the substrate (5) of at least one connection hole (9) at least partially closed by a rear contact region (15), and **characterized in that** the method comprises a step of coating on the rear face of the substrate with a layer of adhesive (8) with a thickness of the layer of adhesive (8) between 1 and 100 micrometres and a step of cladding with a layer of conductive material (50) on the adhesive layer (8), the antenna (16) being formed in the layer of conductive material (50).

2. Method according to Claim 1, wherein a layer of adhesive is coated onto the front face of the substrate (5).

3. Method according to one of the preceding claims, wherein at least the layer of adhesive (8) coated onto the rear face (7) has a thickness between 10 and 50 micrometres.

4. Method according to one of the preceding claims, wherein the layer of adhesive (8) on the rear face (7) has a thickness between 15 and 25 micrometres.

5. Connector for a chip card module, comprising at least one electrically conductive contact (15) on a front face (6) of a substrate (5) consisting of an electrically insulating magnetic material, this substrate (5) also comprising a rear face (7) with an antenna (16), a thickness between the front face (6) and the rear face (7), and at least one connection hole (9) produced in the thickness of the substrate (5) and at least partially closed by a rear contact region (15),
**characterized in that** the substrate comprises a layer of adhesive (8), between the substrate (5) and a layer of conductive material (50) in which the antenna (16) is formed, this layer of adhesive having a thickness between 1 and 100 micrometres.

6. Connector according to Claim 5, wherein the layer of adhesive (8) on the rear face (7) has a thickness between 10 and 50 micrometres.

7. Connector according to Claim 5, wherein the layer of adhesive (8) on the rear face (7) has a thickness between 15 and 25 micrometres.

8. Chip card module, comprising a connector (3b) according to one of Claims 5 to 7.
